# EUROPÄISCHE PATENTSCHRIFT

(11) **EP 2 495 292 B1**
(45) Veröffentlichungstag und Bekanntmachung des Hinweises auf die Patenterteilung: **24.07.2013**
(21) Anmeldenummer: 11157081.8
(22) Anmeldetag: 04.03.2011
(51) Int. Cl.: C09J 5/02, B05D 3/02, B05D 3/04, B05B 13/04

(54) **Fügeflächenvorbehandlungsvorrichtung und Fügeflächenvorbehandlungsverfahren**
Joining surface treatment device and method
Dispositif de prétraitement de surfaces d'assemblage et procédé de prétraitement de surfaces d'assemblage

(43) Veröffentlichungstag der Anmeldung: 05.09.2012
(73) Patentinhaber: FFT EDAG Produktionssysteme GmbH & Co. KG, 36041 Fulda (DE)
(72) Erfinder: Dietz, Siegfried, 35327, Ulrichstein (DE); Gamringer, Florian, 92533, Wernberg-Köblitz (DE)
(74) Vertreter: Schuhbießer, Irmgard Gertrud

(56) Entgegenhaltungen:
- EP-A2- 0 761 415
- EP-A2- 1 666 553
- WO-A1-2004/099333
- DE-A1- 4 428 382
- DE-A1- 10 020 679
- DE-A1-102004 033 728

## Beschreibung

Die Erfindung bezieht sich auf eine Fügeflächenvorbehandlungsvorrichtung und ein Fügeflächenvorbehandlungsverfahren zur Vorbehandlung einer Fügefläche zum Zusammenfügen zweier Bauteile, und insbesondere auf eine Fügeflächenvorbehandlungsvorrichtung und ein Fügeflächenvorbehandlungsverfahren bei denen ein Primer bzw. Haftvermittler auf eine Oberfläche eines Bauteils auf eine spezielle Weise aufgetragen wird, bevor das Bauteil weiterbehandelt wird, beispielsweise mittels einer Klebevorrichtung zum Verkleben mit einem anderen Bauteil.

Bei der industriellen Fertigung von Produkten aus mehreren Bauteilen sind im Bereich der Fügetechnik Bauteile aus gleichen und/oder unterschiedlichen Materialien stoffschlüssig miteinander zu verbinden. Beispielsweise wird die Fügetechnik in der Mobilitätsindustrie bei der Montage von Front- und Heckscheiben usw. von Fahrzeugen eingesetzt. Hierbei müssen hochwertige Klebeverbindungen zwischen Glas und Metall hergestellt werden, die vorhandenen rechtlichen Sicherheitsanforderungen und/oder Garantievorgaben von Herstellern für solche Verbindungen genügen können.

Es ist bekannt, dass bei einer Klebeverbindung von zwei Bauteilen die Bauteile oft zunächst von anhaftendem Schmutz oder Ölschutzfilmen usw. zu reinigen sind. Zudem ist es bekannt, die Oberfläche eines Bauteils mit einem Primer, einem Haftvermittler, vorzubehandein, um ein Aneinanderhaften von Bauteilen zu verbessern oder überhaupt zu ermöglichen.

DE 100 20 679 A1 beschreibt ein Verfahren und eine Vorrichtung zum Abdichten von Fugen und Nähten in Kraftfahrzeugkarosserien.

US 7,467,452 B2 offenbart ein Verfahren zum Aufbringen von fließfähigen Materialien, insbesondere Klebstoff, auf Komponenten von herzustellenden Produkten, bei dem die Oberfläche der Komponenten vor dem Aufbringen der fließfähigen Materialien beispielsweise mittels Plasma oder einer Blitzlampe gereinigt wird. Hierbei kann mit der Blitzlampe auch die Oberfläche der Komponente erwärmt werden. Zudem ist auch das Aufbringen eines Primers nach dem Reinigen der Oberfläche und vor dem Aufbringen von fließfähigen Materialien erwähnt.

Die Veröffentlichung "Development of an adhesive-primer for polypropylene composites" von David Trudel-Boucher, Tan Minh Ton-That und Johanne Denault, Industrial Materials Institute, National Research Council of Canada, beschreibt einen haftfähigen Primer bzw. Haftvermittler, welcher die Verklebung von Polymeren und speziell von Polypropylene ermöglicht bzw. verbessert.

Bei Klebeverbindungen von Bauteilen sind jedoch in vielen Fällen nur Teile der Oberflächen der Bauteile zu verbinden. Dies ist insbesondere bei Glasscheiben von Fahrzeugen der Fall, bei denen nur ein schmaler Außenrand der Glasscheibe mit der Karosserie des Fahrzeugs verklebt wird.

Außerdem sind im Zuge immer schneller werdender Fertigungsprozesse immer kürzere Zeiten für die Herstellung von sicheren Klebeverbindungen einzuhalten. Kritische Zeit ist hierbei die Abtrockungszeit oder auch Ablüftzeit des Primers. Die Ablüftzeit ist die Zeit, die der Primer benötigt, um eine Oberfläche auf das Verkleben vorzubereiten und vollständig von der Oberfläche zu verdampfen bzw. abzulüften, nachdem er auf die Oberfläche aufgetragen wurde. Ein Verkleben kann erst nach vollständigem Ablüften des Primers von der Oberfläche erfolgen.

Derzeit kommt bei bekannten Fügeflächenvorbehandlungsvorrichtungen und Fügeflächenvorbehandlungsverfahren für Glasscheiben von Fahrzeugen lösemittelhaltiger Primer, wie beispielsweise Schwarzprimer, zum Einsatz, weicher ein Primer ist, in den Rußpartikel gemischt sind. Ein solcher Schwarzprimer hat bei einer Umgebungstemperatur von ca. 20 °C eine Ablüftzeit von ca. 30 Sekunden. In Bezug auf die geforderte Beschleunigung des Fertigungsprozesses ist jedoch die Ablüftzeit noch nicht ausreichend kurz. Darüber hinaus ist es nachteilig, dass beim Mischen der Rußpartikel in den Primer in der Regel auch Rußpartikel in die Umgebung verteilt werden. Anschließend werden die in dem Schwarzprimer enthaltenen Rußpartikel beim Ablüften des Primers in die Umgebung verteilt. Außerdem ist es in Bezug auf die Umwelt nachteilig, dass der Schwarzprimer Lösungsmittel enthält, die beim Ablüften des Schwarzprimers an die Umwelt freigegeben werden. Alle diese Wirkungen sind unerwünscht. Der Reinigungsbedarf der Fügeflächenvorbehandlungsvorrichtung bzw. der ihr übergeordneten Anlage sowie der Bauteile und auch der Aufwand für die Einhaltung der geforderten Qualitätsstandards für das Fahrzeug ist erhöht.

DE 44 28 382 A1 beschreibt einen wäßriger Primer für unpolare Kunststoffe, der auf eine zu bindende Oberfläche aufgetragen und mit warmer Luft oder infrarotstrahlung getrocknet wird.

EP 1 666 553 A2 offenbart ein Verfahren zum Aufbringen eines wässrigen Primers zur Verklebungsvorbereitung auf die Kunststoffoberfläche eines Gegenstandes. Hierbei wird zumindest die Oberfläche oder der Primer erwärmt.

WO 2004/099333 A1 bezieht sich auf ein Verfahren zur Gegenstandsverklebung, worin ein Mittel zur Vorbereitung der Verklebung aufgetragen und vor dem Verkleben eine Konditionierung vorgenommen wird. Hierbei ist vorgesehen, dass eine Konditionierung unter Bürsten erfolgt.

DE 10 2004 033 728 A1 offenbart ein Verfahren zum Bearbeiten und Verkleben von Werkstücken aus einem Metall oder einer Metalilegierung mit einer hydratisierten Oxid- und/oder Hydroxidschicht. Hierbei kommt für ein Reinigen und Aktivieren der Klebefläche und für das Nachbehandeln eines Haftvermittlers ein atmosphärisches Plasma zum Einsatz.

Es ist Aufgabe der Erfindung, eine Fügeflächenvorbehandlungsvorrichtung und ein Fügeflächenvorbehandlungsverfahren zum Vorbehandeln einer Fügefläche zum Zusammenfügen zweier Bauteile zur Verfügung zu stellen, welche gegenüber derzeit am Markt verfügbaren Fügeflächenvorbehandlungsvorrichtungen und Fügeflächenvorbehandlungsverfahren verbessert sind.

Die Aufgabe wird durch eine Fügeflächenvorbehandlungsvorrichtung zur Vorbehandlung einer Fügefläche eines Bauteils, die zum Zusammenfügen zweier Bauteile dient, nach Anspruch 1 gelöst.

Vorteilhafte weitere Ausgestaltungen der Fügeflächenvorbehandlungsvorrichtung sind in den abhängigen Patentansprüchen angegeben.

Vorzugsweise ist die Wärmeleistung der Wärmequelle stufenlos regelbar.

Erfindungsgemäß hat die Fügeflächenvorbehandlungsvorrichtung zudem eine Antriebseinrichtung zum Antrieb der Anordnung aus Wärmequelle und Primerauftrageinrichtung in eine Bewegung relativ zum ersten Bauteil. Die Fügeflächenvorbehandlungsvorrichtung kann derart ausgestaltet sein, dass das erste Bauteil an der Anordnung aus Wärmequelle und Primerauftrageinrichtung vorbeibewegbar ist.

Es besteht die Möglichkeit, dass die Wärmequelle(n) eine Infrarotstrahlungsquelle oder eine Laserquelle oder eine Induktionsquelle oder ein Heißluftgebläse oder ein Gebläse zum Einblasen von warmer Druckluft ist/sind.

Es ist von Vorteil, wenn die Wärmequelle eine an die Fügefläche angepasste Form haben und/oder um die Fügefläche schwenkbar ist.

Die Primerauftrageinrichtung ist bevorzugt zum Auftrag von Hydroprimer ausgestaltet. Die Primerauftrageinrichtung kann auch zum Auftrag von erwärmtem Primer ausgestaltet sein.

Die Primerauftrageinrichtung kann derart ausgestaltet sein, dass sie die Menge des aufgetragenen Primers in Abhängigkeit von der Geschwindigkeit einer Relativbewegung zwischen dem ersten Bauteil und der Anordnung aus Wärmequelle(n) und Primerauftrageinrichtung einstellt.

Erfindungsgemäß die zuvor beschriebene Fügeflächenvorbehandlungsvorrichtung Teil einer Automatisierungsanlage zur Produktion eines Gegenstands aus mindestens zwei Bauteilen, die auch eine Aufnahmevorrichtung umfasst zur Aufnahme des ersten Bauteils, so dass der Teil der Oberfläche des ersten Bauteils, an welchem das erste Bauteil an das zweite Bauteil gefügt werden soll, bei einer Vorbehandlung des ersten Bauteils mit der Fügeflächenvorbehandlungsvorrichtung der Anordnung aus Wärmequelle und Primerauftrageinrichtung zugewandt ist.

Die Automatisierungsanlage kann auch eine Antriebseinrichtung haben zum Antrieb der Aufnahmevorrichtung, so dass sich die Aufnahmevorrichtung und/oder die Anordnung relativ zueinander bewegen.

In einer Ausgestaltung kann die Automatisierungsanlage eine Klebevorrichtung zum aneinander Kleben des ersten und zweiten Bauteils an der Fügefläche aufweisen, wobei die Klebevorrichtung der Fügeflächenvorbehandlungsvorrichtung unmittelbar nachgeschaltet ist.

Die Aufgabe wird zudem durch ein Fügeflächenvorbehandlungsverfahren zum Vorbehandeln einer Fügefläche eines Bauteils, die zum Zusammenfügen zweier Bauteile dient, nach Anspruch 15 gelöst.

Mit der zuvor beschriebenen Fügeflächenvorbehandlungsvorrichtung und dem Fügeflächenvorbehandlungsverfahren kann eine partielle Erwärmung der Oberfläche des ersten Bauteils vor einem Auftrag des Primers stattfinden, Zudem kann, nach dem Auftrag des Primers auf den bereits zuvor erwärmten Teil der Oberfläche, nur eine partielle Erwärmung der Oberfläche des ersten Bauteils stattfinden. Hierbei kann insbesondere Warmluft oder Druckluft und bevorzugt können Infrarotstrahler Verwendung finden. Besonders durch diese anschließende Erwärmung kommt es zu einem schnellen Ablüften des Primers. Zudem wird durch die partielle Erwärmung der Oberfläche des ersten Bauteils nur in dem Bereich, in dem Primer auf das erste Bauteil aufzutragen ist, eine unnötige Erwärmung des ersten Bauteils auch in anderen Oberflächenbereichen, die nicht mit dem Primer zu versehen sind, vermieden. Dadurch wird der Energiebedarf der Fügeflächenvorbehandlungsvorrichtung und des Fügeflächenvorbehandlungsverfahrens minimiert und es wird keine Energie verschwendet.

Außerdem kann durch eine optimale Einstellung der Primertemperatur bei und nach dem Auftrag auf das erste Bauteil eine optimale bzw. so kurz wie mögliche Ablüftzeit des Primers erzielt werden. Dadurch kann die Taktzeit für die Vorbehandlung eines Bauteils mit der Fügeflächenvorbehandlungsvorrichtung und dem Fügeflächenvorbehandlungsverfahren optimiert und insbesondere gegenüber dem Stand der Technik verkürzt werden.

Durch die zuvor beschriebene spezielle Anordnung der Wärmequelle oder der ersten und zweiten Wärmequelle und der Primerauftrageinrichtung sind die zuvor beschriebenen Schritte, d.h. erstes Erwärmen, Auftragen des Primers, und zweites Erwärmen, in einem Prozess des Vorbehandelns zusammengefasst. Dadurch kann, indem die Fügefläche des Bauteils einmal mit der Fügeflächenvorbehandlungsvorrichtung abgefahren wird, der Prozess des Vorbehandelns abgeschlossen werden. Bevorzugt kann unmittelbar anschließend eine Klebevorrichtung angeordnet sein, welche das vorbehandelte Bauteil mit einem anderen Bauteil verklebt und somit den Prozess des Fügens von zwei Bauteilen abschließt.

Die zuvor beschriebene Fügeflächenvorbehandlungsvorrichtung und das Fügeflächenvorbehandlungsverfahren sind besonders vorteilhaft in der Mobilitätsindustrie bzw. bei der Montage von Front- und Heckscheiben usw. von Fahrzeugen einsetzbar. Die hierbei hergestellten Klebeverbindungen zwischen beispielsweise Glas und Metall erfüllen in allen Aspekten die vorhandenen rechtlichen Sicherheitsanforderungen und/oder Garantievorgaben von Herstellern für solche Verbindungen.

Nachfolgend wird die Erfindung unter Bezugnahme auf die beiliegende Zeichnung und anhand von Ausführungsbeispielen ausführlicher beschrieben. Es zeigen:
Fig. 1 eine dreidimensionale Ansicht einer Automatisierungsanlage mit einer Fügeflächenvorbehandlungsvorrichtung gemäß einem ersten Ausführungsbeispiel, das von den Ansprüchen nicht umfasst ist;
Fig. 2 ein Detail B der in Fig. 1 gezeigten Fügeflächenvorbehandlungsvorrichtung;
Fig. 3 eine Seitenansicht des Details B der in Fig. 1 gezeigten Fügeflächenvorbehandlungsvorrichtung;
Fig. 4 eine weitere Seitenansicht des Details B der in Fig. 1 gezeigten Fügeflächenvorbehandlungsvorrichtung;
Fig. 5 eine Untersicht unter die erfindungsgemäße Fügeflächenvorbehandlungsvorrichtung gemäß dem Detail B von Fig. 1;
Fig. 6 noch eine weitere Seitenansicht des Details B der in Fig. 1 gezeigten Fügeflächenvorbehandlungsvorrichtung;
Fig. 7 ein Detail einer Fügeflächenvorbehandlungsvorrichtung gemäß einem zweiten Ausführungsbeispiel, das von den Ansprüchen umfasst ist; und
Fig. 8 ein Detail einer Fügeflächenvorbehandlungsvorrichtung gemäß einem dritten Ausführungsbeispiel, das von den Ansprüchen umfasst ist.

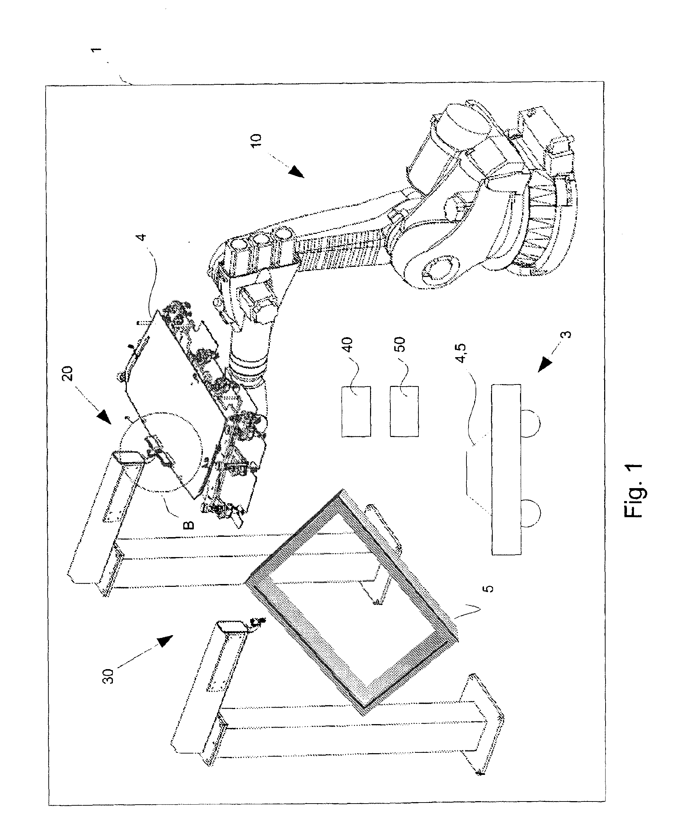

Fig. 1 zeigt eine Automatisierungsanlage 1 zur Produktion eines nur schematisch dargestellten Gegenstands 3, wie beispielsweise ein Fahrzeug und insbesondere ein Kraftfahrzeug, aus mindestens einem ersten Bauteil 4 und einem zweiten Bauteil 5. Das erste Bauteil 4, das in Fig. 1 als Glasscheibe dargestellt ist, wie beispielsweise eine Front- oder Heckscheibe, wird von einem Roboter 10 derart gehandhabt, dass es unter einer Fügeflächenvorbehandlungsvorrichtung 20 angeordnet ist. Die Fügeflächenvorbehandlungsvorrichtung 20 ist nachfolgend noch anhand des in einem Kreis angedeuteten Details B genauer beschrieben. Das zweite Bauteil 5 ist in Fig. 1 sehr schematisch als Karosserieteil des Gegenstands 3 dargestellt. Der Fügeflächenvorbehandlungsvorrichtung 20 ist eine Klebevorrichtung 30 nachgeschaltet, mit weicher das erste und zweite Bauteil 4, 5 mittels Klebung aneinandergefügt werden können. Eine nur schematisch dargestellte Steuervorrichtung 40 steuert den Roboter 10, die Fügeflächenvorbehandlungsvorrichtung 20 und/oder die Klebevorrichtung 30. Die Steuerung bzw. Regelung erfolgt auf der Grundlage von Erfassungsergebnissen einer ebenfalls nur schematisch dargestellten Erfassungsvorrichtung 50 zum Erfassen von Bewegungen, Stellungen, Geschwindigkeiten, Dosiermengen, Füllmengen, Temperaturen usw. die beim Betrieb der Automatisierungsanlage 1 erfassbar sind.

Bei der Automatisierungsanlage 1 können sowohl das erste Bauteil 4 als auch das zweite Bauteil 5 mit der Fügeflächenvorbehandlungsvorrichtung 20 vorbehandelt sein. Es ist aber auch nur die Vorbehandlung entweder des ersten oder zweiten Bauteils 4, 5 mit der Fügeflächenvorbehandlungsvorrichtung 20 möglich. Das zweite Bauteil 5 kann natürlich auch die gesamte Karosserie des Fahrzeugs, des Gegenstands 3, sein. Nachfolgend ist nur eine Vorbehandlung des ersten Bauteils 4 mit der Fügeflächenvorbehandlungsvorrichtung 20 beschrieben, es ist jedoch auch analog eine Vorbehandlung des zweiten Bauteils 5 möglich.

In der folgenden Beschreibung wird von einer Temperatur des ersten Bauteils 4 vor der Behandlung mit der Fügeflächenvorbehandlungsvorrichtung 20 von ca. 19 bis 21°C, also Raumtemperatur, ausgegangen. Ein "Erwärmen eines Teils der Oberfläche des ersten Bauteils 4" bedeutet nachfolgend eine Erhöhung der Temperatur des ersten Bauteils 4 um ca. 10° C also auf eine Bauteiltemperatur von ca. 29 bis 31°C, es sind jedoch auch kleinere oder größere Temperaturerhöhungen der Oberfläche des Bauteils möglich. Es haben sich bei Versuchen jedoch schon bei einer Temperaturerhöhung um 5°C enorme Verbesserungen bei der Ablüftzeit des Primers gezeigt. Die mögliche Erwärmung ist jedoch immer auf das Material des ersten Bauteils 4 und des Primers abzustimmen, um ihre Beschädigung zu vermeiden.

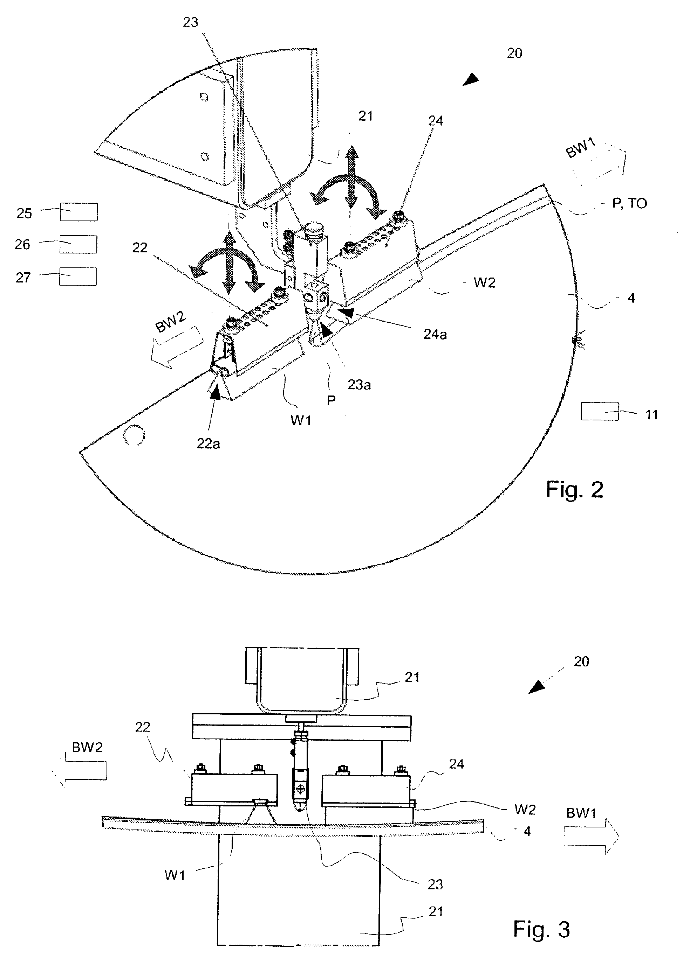

Wie aus Fig. 2 ersichtlich, hat die Fügeflächenvorbehandlungsvorrichtung 20 eine Halteeinrichtung 21 zum Halten einer ersten Wärmequelle 22, einer Primerauftrageinrichtung 23 und einer zweiten Wärmequelle 24. Die erste Wärmequelle 22 hat eine Wärmeaustrittsöffnung 22a zum Austritt von Wärme W1 aus der ersten Wärmequelle 22. Die Primerauftrageinrichtung 23 hat eine Primeraustrittsöffnung 23a zum Austritt von Primer P aus der Primerauftrageinrichtung 23 und zum Auftrag auf das Bauteil 4. Und die zweite Wärmequelle 24 hat eine Wärmeaustrittsöffnung 24a zum Austritt von Wärme W2 aus der zweiten Wärmequelle 24. Sind die erste Wärmequelle 22, die Primerauftrageinrichtung 23 und die zweite Wärmequelle 24 derart angeordnet, wie in Fig. 2 gezeigt, können die Wärme W1, W2 aus der ersten und zweiten Wärmequelle 22, 24 auf das erste Bauteil 4 austreten und das erste Bauteil 4 an seinem den Wärmeaustrittsöffnungen 22a, 24a zugewandten Teil der Oberfläche TO erwärmen. Dieser Teil der Oberfläche TO entspricht in etwa der Fläche, die in Fig. 2 mit dem aufgetragenen Primer P bedeckt ist, kann jedoch auch etwas breiter sein als der auf die Oberfläche aufgetragene Primer P, wie er in in Fig. 2 dargestellt ist. Das Bauteil 4 und die Fügeflächenvorbehandlungsvorrichtung 20 bewegen sich relativ zueinander, wie in Fig. 2 durch einen Blockpfeil BW1 für das Bauteil 4 und einen Blockpfeil BW2 für die Fügeflächenvorbehandlungsvorrichtung 20 angegeben. Hierbei kann das erste Bauteil mit der nur schematisch dargestellten ersten Antriebseinrichtung 11 und/oder die Fügeflächenvorbehandlungsvorrichtung 20 mit der nur schematisch dargestellten zweiten Antriebseinrichtung 25 angetrieben werden. Die erste und zweite Antriebseinrichtung 11, 25 werden wiederum von der Steuervorrichtung 40 gesteuert.

Somit sind die erste Wärmequelle 22, die Primerauftrageinrichtung 23 und die zweite Wärmequelle 24 einem Teil TO der Oberfläche des ersten Bauteils 4 zugewandt. Anders ausgedrückt, sind die Wärmeaustrittsöffnung 22a, die Primeraustrittsöffnung 23a und die Wärmeaustrittsöffnung 24a einer, und zwar derselben, Oberfläche des ersten Bauteils 4 zugewandt. Zudem ist die Primerauftrageinrichtung 23 der ersten Wärmequelle 22 nachgeschaltet und die zweite Wärmequelle 24 ist der Primerauftrageinrichtung 23 nachgeschaltet. Hierbei sind die erste Wärmequelle 22, die Primerauftrageinrichtung 23 und die zweite Wärmequelle 24 in einer Reihe nacheinander angeordnet und zueinander ausgerichtet, wie in Fig. 2 abgebildet. Die erste und zweite Wärmequelle 22, 24 haben jeweils eine längliche Form, das heißt, sie sind länger als breit, und sind ihrer Länge nach in Richtung der oben genannten Reihe angeordnet. Gleichermaßen haben auch die Wärmeaustrittsöffnungen 22a, 24a eine längliche Form. Die zwischen der ersten und zweiten Wärmequelle 22, 24 angeordnete Primerauftrageinrichtung 23 hat dagegen eine punktförmige Primeraustrittsöffnung 23a. Somit sind die erste und zweite Wärmequelle 22, 24, und insbesondere ihre Wärmeaustrittsöffnungen 22a, 24a, und die Primeraustrittsöffnung 23a in ihrer Form an die Form des von der Fügeflächenvorbehandlungsvorrichtung 20 vorzubehandelnden Teils TO der Oberfläche des Bauteils 4 angepasst.

Durch diese Anordnung der ersten Wärmequelle 22, der Primerauftrageinrichtung 23 und der zweiten Wärmequelle 24 relativ zum ersten Bauteil 4 kann die erste Wärmequelle 22 genau den Teil TO der Oberfläche des Bauteils 4 bzw. die Fügefläche des Bauteils 4 erwärmen, auf welcher die Primerauftrageinrichtung 23 unmittelbar anschließend den Primer P in einer Primerspur P, TO aufträgt. Zudem wird die zweite Wärmequelle 24 anschließend auch nur annähernd den Teil TO bzw. Bereich der Oberfläche des Bauteils 4 erwärmen, auf den auch der Primer P aufgetragen ist.

Der Primer P ist vorzugsweise ein herkömmlicher wässriger Primer bzw. Hydroprimer, der aus der Primeraustrittsöffnung 23a auf das Bauteil 4 gesprüht wird. Bei dem Primerauftrag mittels der Primerauftrageinrichtung 23 handelt es sich also um kontaktloses Sprühen. Der herkömmliche Hydroprimer besteht zu ca. 98% aus Wasser und enthält kein Lösungsmittel. Der Primer P kann jedoch auch Schwarzprimer sein.

Die erste Wärmequelle 22 ist vorzugsweise mittels einer schematisch dargestellten dritten Antriebseinrichtung 26 um ihre vertikale Achse bewegbar bzw. schwenkbar und/oder vertikal nach oben und unten bewegbar (Auf/Ab-Bewegung), wie in Fig. 2 mittels dunkler Pfeile gezeigt. Gleichermaßen ist die zweite Wärmequelle 24 vorzugsweise mittels einer schematisch dargestellten vierten Antriebseinrichtung 27 um ihre vertikale Achse bewegbar bzw. schwenkbar und/oder vertikal nach oben und unten bewegbar (Auf/Ab-Bewegung), wie in Fig. 2 mittels dunkler Pfeile gezeigt. Die vertikale Achse der ersten und zweiten Wärmequelle 22, 24 ist in Fig. 2 als gestrichelte Linie dargestellt, und sie ist senkrecht zu der Länge der ersten und zweiten Wärmequelle 22, 24 und senkrecht zu der Fügefläche des ersten Bauteils 4 bzw. des Teils TO des ersten Bauteils 4.

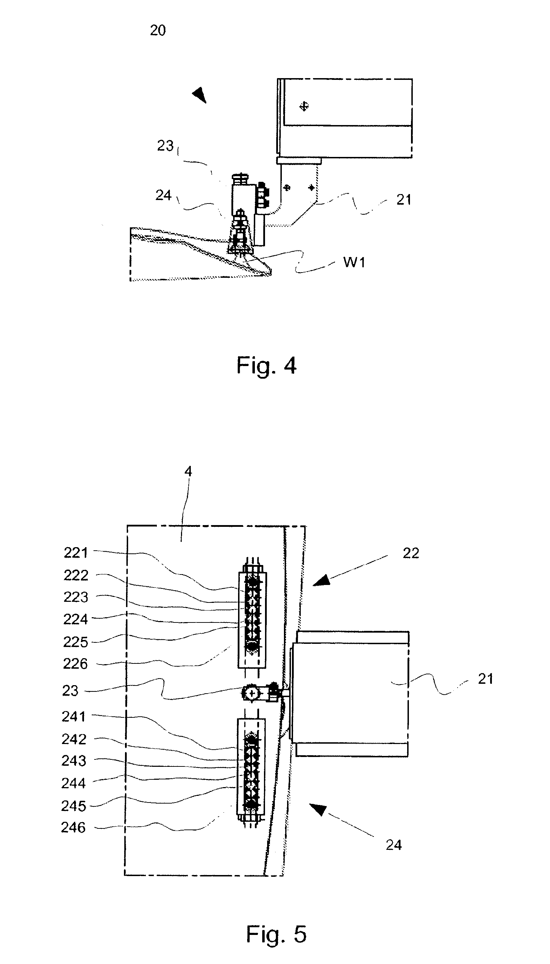

Fig. 3 und Fig. 4 zeigen zwei verschiedene Seitenansichten des in Fig. 2 veranschaulichten Details B der Fügeflächenvorbehandlungsvorrichtung von Fig. 1. In diesen Figuren sind alle Teile mit den gleichen Bezugszeichen versehen. Der Übersichtlichkeit halber sind jedoch nicht alle Teile mit Bezugszeichen versehen.

Wie in Fig. 3 und Fig. 4 abgebildet, ist das Bauteil 4 keine ebene Platte oder Scheibe, sondern es hat eine gebogene Form, wie beispielsweise eine Front- und Heckscheibe eines Fahrzeugs. In diesem Fall ist ein Bewegen der ersten und/oder zweiten Wärmequelle 22, 24 mittels Verschwenken und Auf/Ab-Bewegung relativ zur Biegeform des Bauteils 4, insbesondere in Form der Glasscheibe, besonders vorteilhaft. Auf diese Weise kann das Bauteil 4, wenn beispielsweise die Fügefläche entlang seines gesamten Umfangs angeordnet ist, wie bei einer Glasscheibe von Fahrzeugen, problemlos und einfach entlang seines gesamten Umfangs mit der Fügeflächenvorbehandlungsvorrichtung 20 vorbehandelt werden.

In Fig. 3 hat zudem die Wärmestrahlung W1 einen geringeren Strahlungskegel als der in Fig. 2 dargestellte Strahlungskegel der Wärmestrahlung W1. Fig. 5 veranschaulicht, wie solche Strahlungskegel erzielt werden können.

Fig. 5 stellt eine Untersicht unter die Anordnung aus erster Wärmequelle 22, Primerauftrageinrichtung 23 und zweiter Wärmequelle 24 dar. Die erste Wärmequelle 22 ist aus mehreren einzelnen Strahlern 221, 222, 223, 224, 225, 226 aufgebaut, die in einer Reihe nacheinander oder hintereinander angeordnet sind, wie in Fig. 5 gezeigt. Ebenso kann die zweite Wärmequelle 24 aus mehreren einzelnen Strahlern 241, 242, 243, 244, 245, 246 aufgebaut sein, die in einer Reihe hintereinander angeordnet sind, wie ebenfalls in Fig. 5 gezeigt. Je nach Bedarf, wie er beispielsweise mit einem Temperatursensor der Erfassungsvorrichtung 50 erfassbar ist, kann die Steuervorrichtung 40 die einzelnen Strahler 221 bis 226 und 241 bis 246 ein- und ausschalten. Dadurch ist die Länge des mit der ersten und zweiten Wärmequelle 22, 24 erwärmbaren Teils TO der Oberfläche des ersten Bauteils 4 einstellbar. Zudem können die einzelnen Strahler 221 bis 226 und 241 bis 246 und somit die erste und zweite Wärmequelle 22, 24 stufenlos gedimmt werden.

Durch alle diese Maßnahmen kann eine Beschädigung des ersten Bauteils 4 bzw. seines Materials vermieden werden.

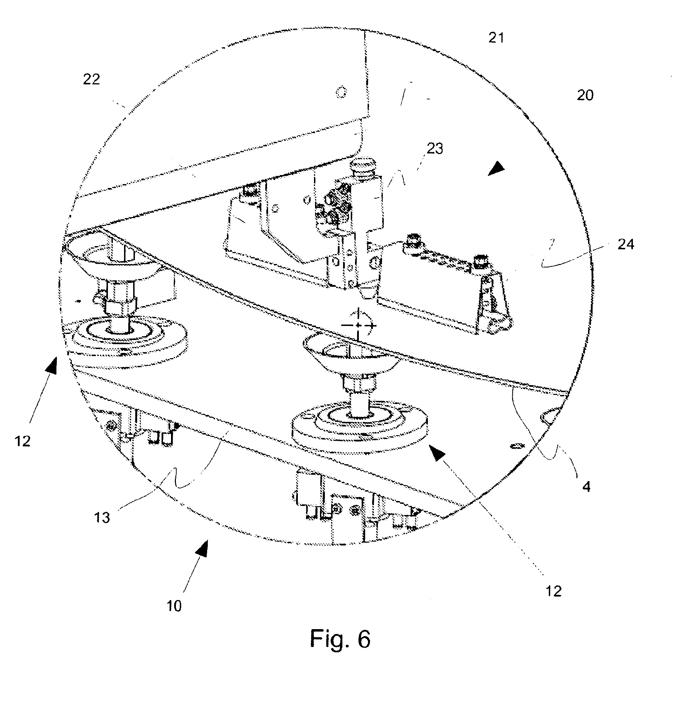

Fig. 6 zeigt ein Detail des Roboters 10 mit der Fügeflächenvorbehandlungsvorrichtung 20. Der Roboter 10 hält das erste Bauteil 4 mit Hilfe von mindestens einem Sauggreifer 12, der bzw. die an einem Träger 13 des Roboters 10 befestigt sind. Die Sauggreifer 12 und der Träger 13 sind in der EP 1256 421 B1 offenbart, die sich auf eine frühere Erfindung des hier erstgenannten Erfinders bezieht, und sind daher hier nicht näher beschrieben. Der Roboter 10 bzw. seine Sauggreifer 12 und sein Träger 13 sind eine Aufnahmevorrichtung zur Aufnahme des Bauteils und können das Bauteil 4 spannungsfrei aufnehmen. Der Roboter 10 bzw. die Aufnahmevorrichtung 10 kann das an ihm/ihr gehaltene erste Bauteil 4 derart unter der Fügeflächenvorbehandlungsvorrichtung 20 verschwenken, dass vorzugsweise immer der gleiche Abstand zwischen Bauteil 4 und Fügeflächenvorbehandlungsvorrichtung 20 vorhanden ist. Hierbei ist der Teil TO der Oberfläche des ersten Bauteils 4, an welchem das erste Bauteil 4 an das zweite Bauteil 5 gefügt werden soll, bei einer Vorbehandlung des ersten Bauteils 4 mit der Fügeflächenvorbehandlungsvorrichtung 20 der Anordnung aus erster und zweiter Wärmequelle 22, 24 und Primerauftrageinrichtung 23 zugewandt.

Der Roboter 10 kann das erste Bauteil 4 abhängig von der Form des ersten Bauteils 4 schneller oder langsamer gegenüber der Fügeflächenvorbehandlungsvorrichtung 20 bewegen bzw. verschwenken. Insbesondere kann der Roboter 10 das erste Bauteil 4 im Eckenbereich des ersten Bauteils 4, also im Falle einer viereckigen Glasscheibe an ihren vier Ecken, gegenüber der Fügeflächenvorbehandlungsvorrichtung 20 langsamer als bei geraden Verbindungsstücken der Ecken bewegen. Um dennoch einen gleichmäßigen Primerauftrag auf dem gesamten Umfang des Bauteils 4 zu erzielen, kann die Steuervorrichtung 40 die Primerauftrageinrichtung 23 steuern, dass sie im Eckenbereich des ersten Bauteils 4 weniger Primer aufträgt als in den anderen Bereichen. Das heißt, die Dosierung des Primers P durch die Primerauftrageinrichtung 23 erfolgt abhängig von der relativen Geschwindigkeit zwischen Primerauftrageinrichtung 23 und erstem Bauteil 4. Gleichermaßen kann die von der ersten und zweiten Wärmequelle 22, 24 abgegebene Wärmestrahlung W1, W2 abhängig von der relativen Geschwindigkeit zwischen Primerauftrageinrichtung 23 und erstem Bauteil 4 gesteuert und geregelt werden. Zudem kann die Steuerung bzw. Regelung in Abhängigkeit von dem Erfassungsergebnis eines nicht dargestellten Temperatursensors der Erfassungsvorrichtung 50 erfolgen. Durch einzelne oder alle diese Maßnahmen kann eine gleichmäßige Erwärmung der Fügefläche bzw. des Teils TO der Oberfläche des ersten Bauteils 4 erzielt werden.

Alle Bewegungen des Roboters 10, also insbesondere nach oben/unten, nach rechts/links, nach vorne/hinten, deren Kombinationen, usw., können ebenfalls von der Steuervorrichtung 40 auf der Grundlage von Erfassungsergebnissen der Erfassungsvorrichtung 50 gesteuert oder geregelt werden. Die Erfassungsergebnisse können auf Informationen von Stellungssensoren, Winkelsensoren, Gyrometer, Geschwindigkeitssensoren usw. beruhen.

Insbesondere können die Fügeflächenvorbehandlungsvorrichtung 20 und ihre Einrichungen stationär sein, während der Roboter 10 das erste Bauteil 4 an der Fügeflächenvorbehandlungsvorrichtung 20 und ihren Einrichtungen vorbeibewegt.

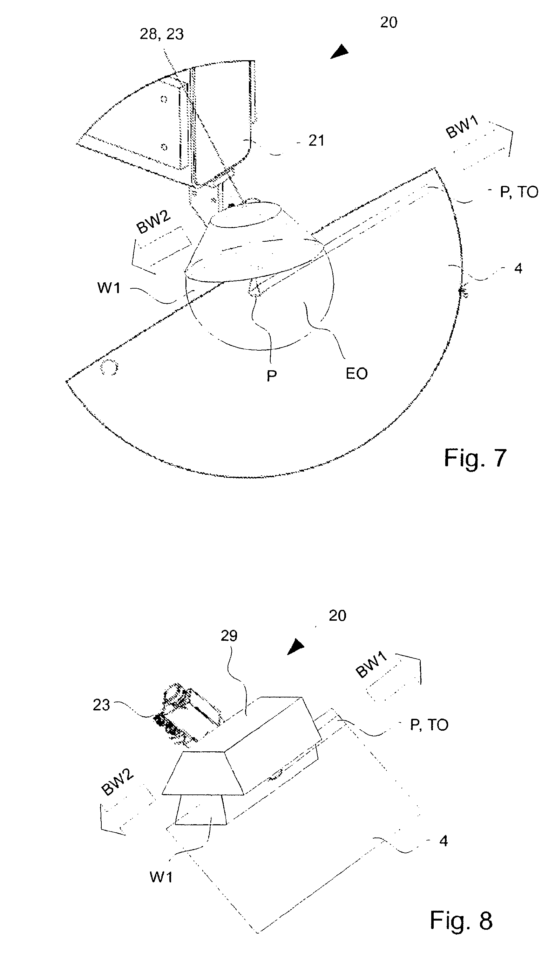

Fig. 7 zeigt ein Detail einer Fügeflächenvorbehandlungsvorrichtung 20 gemäß einem zweiten Ausführungsbeispiel, das von den Ansprüchen umfasst ist, analog zu dem in Fig. 2 gezeigten Detail B der Fügeflächenvorbehandlungsvorrichtung gemäß dem ersten Ausführungsbeispiel, das von den Ansprüchen nicht umfasst ist. Gleiche und gleichbedeutende Teile sind in beiden Ausführungsbeispielen mit denselben Bezugszeichen versehen.

Bei der Fügeflächenvorbehandlungsvorrichtung 20 gemäß dem zweiten Ausführungsbeispiel ist anstelle von zwei Wärmequellen 22, 24 nur eine Wärmequelle 28, die einen Teil EO der Oberfläche des Bauteils 4 erwärmt. Die Primerauftrageinrichtung 23 ist in etwa in der Mitte der Wärmequelle 28 angeordnet. Dadurch kann die Wärmequelle 28 sowohl den Teil TO der Oberfläche des ersten Bauteils 4, an den das erste Bauteil 4 an das zweite Bauteil 5 gefügt werden soll, sowohl vor als auch nach dem Auftrag von Primer P auf das erste Bauteil 4 erwärmen bzw. Vorheizen und Nachheizen.

Die Wärmequelle 28 kann beispielsweise die Form eines Rings haben, in dessen Mitte die Primerauftrageinrichtung 23 angeordnet ist. Dadurch entspricht in diesem Fall der Nachheizbereich dem Vorheizbereich. Die Primerauftrageinrichtung 23 muss jedoch nicht in der Mitte der Wärmequelle 28 angeordnet sein. Es ist insbesondere auch möglich, dass die Wärmequelle 28 und die Primerauftrageinrichtung23 derart zueinander angeordnet sind, dass die Wärmequelle 28 das erste Bauteil 4 nur vor dem Auftrag des Primers P erwärmt bzw. vorheizt. Alternativ ist es insbesondere auch möglich, dass die Wärmequelle 28 und die Primerauftrageinrichtung23 derart zueinander angeordnet sind, dass die Wärmequelle 28 das erste Bauteil 4 nur nach dem Auftrag des Primers P erwärmt bzw. nachheizt. Alle anderen Varianten dazwischen sind auch möglich.

Die Anordnung nur einer Wärmequelle 28 relativ zur Primerauftrageinrichtung 23 gemäß diesem Ausführungsbeispiel ist besonders vorteilhaft bei kurvenförmig auszuführendem Primerauftrag auf das erste Bauteil 4, also beispielsweise an den Ecken der Front- oder Heckscheibe eines Fahrzeugs 3. Dadurch kann das Verschwenken der Wärmequelle 28 entfallen. Dafür ist gegenbenenfalls der mit der Wärmequelle 28 erwärmte Teil EO etwas größer als bei dem ersten Ausführungsbeispiel.

Alle anderen Ausgestaltungen des zweiten Ausführungsbeispiels sind gleich oder analog zu denjenigen des ersten Ausführungsbeispiels und sind daher hier nicht weiter beschrieben.

Fig. 8 zeigt ein Detail einer Fügeflächenvorbehandlungsvorrichtung 20 gemäß einem dritten Ausführungsbeispiel, das von den Ansprüchen umfasst ist, analog zu den in Fig. 2 und Fig. 7 gezeigten Details der Fügeflächenvorbehandlungsvorrichtungen gemäß dem ersten Ausführungsbeispiel, das von den Ansprüchen nicht umfasst ist und dem zweiten Ausführungsbeispiel, das von den Ansprüchen umfasst ist. Gleiche und gleichbedeutende Teile sind in allen Ausführungsbeispielen mit denselben Bezugszeichen versehen.

Bei der Fügeflächenvorbehandlungsvorrichtung 20 gemäß dem dritten Ausführungsbeispiel ist, genauso wie bei dem zweiten Ausführungsbeispiel, anstelle von zwei Wärmequellen 22, 24 nur eine Wärmequelle 29 vorhanden. Bei diesem Ausführungsbeispiel ist jedoch die Primerauftrageinrichtung 23 seitlich neben der Wärmequelle 29 angeordnet, wobei die Primerauftrageinrichtung 23 den Primer P in etwa in die Mitte des von der Wärmequelle 29 erwärmten Teils TO der Oberfläche des ersten Bauteils 4 aufträgt. Dadurch kann auch die Wärmequelle 29 den Teil TO der Oberfläche des ersten Bauteils 4, an den das erste Bauteil 4 an das zweite Bauteil 5 gefügt werden soll, sowohl vor als auch nach dem Auftrag von Primer P auf das erste Bauteil 4 erwärmen. Wie bei dem zweiten Ausführungsbeispiel sind auch nur ein Vor- oder Nachheizen oder alle anderen Kombinationen dazwischen möglich.

Die Primerauftrageinrichtung 23 ist vorzugsweise derart angeordnet oder ausgestaltet, dass sie den Primer P in einem optimierten Winkel auf das erste Bauteil 4 aufträgt.

Die Wärmequelle 29 kann langgestreckt sein, wie in Fig. 8 gezeigt und wie bei dem ersten Ausführungsbeispiel. Somit ist die Wärmequelle 29 an den Teil TO der Oberfläche des ersten Bauteils 4, an den das erste Bauteil 4 an das zweite Bauteil 5 gefügt werden soll, angepasst.

Bei kurvenförmig auszuführendem Primerauftrag auf das erste Bauteil 4 kann die Wärmequelle 29 bei Bedarf ebenso bewegbar sein, wie die erste und zweite Wärmequelle 22, 24 des ersten Ausführungsbeispiels.

Alle anderen Ausgestaltungen des dritten Ausführungsbeispiels sind gleich oder analog zu denjenigen des ersten Ausführungsbeispiels und sind daher hier nicht weiter beschrieben.

Alle zuvor beschriebenen Ausgestaltungen der Fügeflächenvorbehandlungsvorrichtung 20 und des Fügeflächenvorbehandlungsverfahrens können einzeln oder in allen möglichen Kombinationen Verwendung finden. Hierbei sind insbesondere folgende Modifikationen denkbar.

Die Form des ersten und zweiten Bauteils 4, 5 ist beliebig wählbar und nicht auf die in den Figuren gezeigte Form beschränkt.

Die Form der Wärmequellen 28, 29 des zweiten und dritten Ausführungsbeispiels ist insoweit frei wählbar, wie die beschriebene Funktion der Erwärmung des Teils TO der Oberfläche des ersten 5 Bauteils 4, an welchem das erste Bauteil 4 an das zweite Bauteil 5 gefügt werden soll, mittels der Wärmequelle 28, 29 vor und nach dem Primerautrag gewährleistet ist.

Es ist vorteilhaft, wenn die Wärmequellen 22, 24, 28, 29 Infrarotstrahlungsquellen sind. Die Wärmequellen 22, 24, 28, 29 können jedoch auch Wärme mittels Induktion, Heißtuft bzw. Heißluftgebläse oder warmer Druckluft erzeugen. Es ist beispielsweise möglich die erste Wärmequelle 22 als Infrarotstrahlungsquelle auszuführen und die zweite Wärmequelle 24 als Wärmequelle, die warme Druckluft erzeugt. Mit der Druckluft kann das Ablüften des Primers P zusätzlich beschleunigt werden. Warme Druckluft bedeutet hier, dass die Druckluft derart erwärmt ist, dass sie das erste Bauteil 4 erwärmen kann, wie zuvor beschrieben. Es sind auch andere Kombinationen der Wärmequellen 22, 24 denkbar, auch wenn sie hier nicht explizit genannt sind.

Unter dem Aspekt des geringen Energieeinsatzes ist jedoch in jedem Fall nach dem derzeitigen Stand der Technik eine rein elektromotorisch betreibbare Fügeflächenvorbehandlungsvorrichtung 20 und Automatisierungsanlage 1 bevorzugt.

Im Falle einer Infrarotstrahlungsquelle als eine der Wärmequellen 22, 24, 28, 29 ist die Wärmequelle vorzugsweise mit einem Blendschutz bzw. einer Einhausung versehen. Dies kann durch den Wärmequellen körper der Wärmequelle 22, 24, 28, 29 realisiert sein, der in Fig. 2 bis Fig. 4 über der Wärmequellenaustrittsöffnung 22a bzw. 24a dargestellt ist. Alternativ zu einer Wärmequelle aus mehreren einzelnen punktförmigen Strahlern 221 bis 226 bzw. 241 bis 246, wie in Fig. 5 und auch in Fig. 2 dargestellt, kann die erste und/oder zweite Wärmequelle 22, 24 auch ein Röhrenstrahler sein. Gleiches gilt für die Wärmequellen 28, 29 des zweiten und dritten Ausführungsbeispiel.

Als erste Wärmequelle 22 kann eine Infrarotstrahlungsquelle mit 1500 W Leistung zum Einsatz kommen, wobei als zweite Wärmequelle 24 eine Infrarotstrahlungsquelle mit 1000 W Leistung gewählt wird. Alternativ kann als erste Wärmequelle 22 eine Infrarotstrahlungsquelle mit 1000 W Leistung zum Einsatz kommen, wobei als zweite Wärmequelle 24 eine Infrarotstrahlungsquelle mit 600 W Leistung gewählt wird.

Es ist vorzuziehen, dass die Wärmeleistung der Wärmequellen 22, 4, 28, 29 stufenlos, je nach Bedarf, regelbar sind. Insbesondere kann auch die Wärmeleistung der ersten oder zweiten Wärmequelle 22, 24 Null sein, das heißt, es wird in Bezug auf einen Primerauftrag entweder nur vorgeheizt oder nur nachgeheizt.

Die Primerauftrageinrichtung 23 kann ein herkömmlicher Kolbendosierer sein, der mit atmosphärischem Druck arbeitet.

Der Primer P kann vor dem Auftrag auf das erste Bauteil 4 bereits vorgewärmt sein. Beispielsweise kann ein herkömmlicher Hydroprimer vorgewärmt auf eine Temperatur von bis zu ca. 35 °C auf das erste Bauteil 4 aufgetragen werden. In jedem Fall ist das Erwärmen des Primers P und auch des ersten Bauteils 4 vor seinem Auftrag auf das erste Bauteil 4 jedoch abhängig von der Art des gewählten Primers P, um nicht durch Überhitzung seine Molekularstruktur zu zerstören.

Im Fall eine Glasscheibe als erstes Bauteil 4, die in ein Fahrzeug eingebaut werden soll, kann die Breite der Primerspur P, TO bzw. des Teils TO der Oberfläche des Bauteils 4 beispielsweise ca. 18 bis 20 mm betragen. Die Dicke des Auftrags des Primers P auf die Oberfläche des ersten Bauteils 4 liegt dabei im µm-Bereich. Darüber hinaus ist es vorteilhaft, wenn die Glasscheibe mit einer lichtundurchlässigen Siebdruckkeramikbeschichtung versehen ist, welche eine Klebealterung der fertig eingebauten Glasscheibe aufgrund von Lichteinfall verhindert. In einem solchen Fall kann anstelle eines Schwarzprimers, der ansonsten zur Vermeidung der Klebealterung eingesetzt wird, ein herkömmlicher Hydroprimer verwendet werden. Da der herkömmliche Hydroprimer im Unterschied zum Schwarzprimer kein Lösungsmittel enthält, kann auch beim Ablüften des Hydroprimers vorteilhafterweise kein Lösungsmittel an die Umwelt freigegeben werden. Der Hydroprimer hat bei der Verwendung mit der Fügeflächenvorbehandlungsvorrichtung 20 und dem Fügeflächenvorbehandlungsverfahren, wie zuvor beschrieben, eine Ablüftzeit von ca. 20 Sekunden.

Bei einer von den Erfindern getesteten Automatisierungsanlage 1 hat die Zeit zum Auftragen des Primers P auf das erste Bauteil 4, einer Frontscheibe eines Kraftfahrzeugs einen Wert von ca. 14 Sekunden, wenn die Relativgeschwindigkeit zwischen erstem Bauteil 4 und Fügeflächenvorbehandlungsvorrichtung 20 einen Wert von 300 mm/Sekunde hat. Da die Ablüftzeit des Hydroprimers als Primer P insgesamt ca. 20 Sekunden beträgt, wie zuvor beschrieben, ist nur eine Wartezeit von 6 Sekunden vorhanden, bis mit der Verklebung der Frontscheibe begonnen werden kann. Die Taktzeit zur Vorbehandlung des ersten Bauteils 4 bzw. der Frantscheibe betrug in diesem Fall also 20 Sekunden. Bei Verwendung des Schwarzprimers beträgt sie 30 Sekunden. Hierbei umfasst die Taktzeit das Aufnehmen des ersten oder zweiten Bauteils zur Vorbehandlung, das Vorbehandeln selbst und das wieder Ablegen des Bauteils. Hierbei ist auch das eventuelle Verfahren des Bauteils und der Fügeflächenvorbehandlungsvorrichtung bzw. ihrer Einrichtungen relativ zueinander umfasst.

Die Klebevorrichtung 30 und der Roboter 10 bzw. das erste Bauteil 4 können zum Auftrag des Klebers auf das erste Bauteil 4 dieselbe Relativbewegung ausführen wie zuvor die Fügeflächenvorbehandlungsvorrichtung 20 und der Roboter 10 bzw. das erste Bauteil 4. Hierbei kann die Klebevorrichtung 30 den Auftrag des Klebers bzw. des Haftmittels unmittelbar bzw. ohne Ablegen des ersten Bauteils 4 nach dem Ablüften des Primers P im Anschluss an die Vorbehandlung mittels der Fügeflächenvorbehandlungsvorrichtung 20 ausführen.

Alternativ zu einer durchgängigen Primerspur P, TO kann die Fügeflächenvorbehandlungsvorrichtung 20 bzw. die Primerauftrageinrichtung auch nur an einzelnen Stellen der Oberfläche des ersten Bauteils 4 Primer P auftragen. Somit ergibt sich eine unterbrochene Primerspur P, TO. Ein solcher Primerauftrag kann ebenfalls mittels der Steuervorrichtung 40 gesteuert werden. Es ist vorteilhaft, dass dann auch das erste Bauteil 4 nur in dem Bereich bzw. an den Teilen TO seiner Oberfläche erwärmt wird, auf den auch der Primer P aufgetragen wird und dann die Verklebung erfolgen soll.

## Patentansprüche

1. Fügeflächenvorbehandlungsvorrichtung (20) zur Vorbehandlung einer Fügefläche (TO) eines Bauteils (4), die zum Zusammenfügen zweier Bauteile (4,5) dient, mit
einer Wärmequelle (28; 29) zur Erwärmung eines Teils (TO) einer Oberfläche eines ersten Bauteils (4), an welchem das erste Bauteil (4) an ein zweites Bauteil (5) gefügt werden soll, und
einer Primerauftrageinrichtung (23) zum Auftrag eines Primers (P) auf einen von der Wärmequelle (28; 29) erwärmbaren Teil (TO) der Oberfläche des ersten Bauteils (4),
wobei die Wärmequelle (28; 29) und die Primerauftrageinrichtung (23) derart zueinander angeordnet sind, dass die Wärmequelle (28; 29) den Teil (TO) der Oberfläche des ersten Bauteils (4), an welchem das erste Bauteil (4) an das zweite Bauteil (5) gefügt werden soll, sowohl vor als auch nach dem Auftrag des Primers (P) durch die Primerauftrageinrichtung (23) erwärmen kann, **dadurch gekennzeichnet, dass** die Fügeflächenvorbehandlungsvorrichtung (20) eine Antriebseinrichtung (25) zum Antrieb der Anordnung (28, 23; 29, 23) aus Wärmequelle (28; 29) und Primerauftrageinrichtung (23) in eine Bewegung (BW2) relativ zum ersten Bauteil (4) umfasst.

2. Fügeflächenvorbehandlungsvorrichtung (20) nach Anspruch 1, wobei die Wärmeleistung der Wärmequelle (28; 29) stufenlos regelbar ist.

3. Fügeflächenvorbehandlungsvorrichtung (20) nach Anspruch 1 oder 2, wobei die Fügeflächenvorbehandlungsvorrichtung (20) derart ausgestaltet ist, dass das erste Bauteil (4) an der Anordnung (28, 23; 29, 23) aus Wärmequelle (28; 29) und Primerauftrageinrichtung (23) vorbeibewegbar ist.

4. Fügeflächenvorbehandlungsvorrichtung (20) nach einem der vorangehenden Ansprüche, wobei die Wärmequelle(n) (28; 29) eine Infrarotstrahlungsquelle oder eine Laserquelle oder eine Induktionsquelle oder ein Heißluftgebläse oder ein Gebläse zum Einblasen von warmer Druckluft ist/sind.

5. Fügeflächenvorbehandlungsvorrichtung (20) nach einem der vorangehenden Ansprüche, wobei die Wärmequelle (29) eine an die Fügefläche (TO) angepasste Form hat und/oder um die Fügefläche (TO) schwenkbar ist.

6. Fügeflächenvorbehandlungsvorrichtung (20) nach einem der vorangehenden Ansprüche, wobei die Primerauftrageinrichtung (23) zum Auftrag von Hydroprimer ausgestältet ist.

7. Fügeflächenvorbehandlungsvorrichtung (20) nach einem der vorangehenden Ansprüche, wobei die Primerauftrageinrichtung (23) zum Auftrag von erwärmtem Primer (P) ausgestaltet ist.

8. Fügeflächenvorbehandlungsvorrichtung (20) nach einem der vorangehenden Ansprüche, wobei die Primerauftrageinrichtung (23) derart ausgestaltet ist, dass sie die Menge des aufgetragenen Primers (P) in Abhängigkeit von der Geschwindigkeit einer Relativbewegung zwischen dem ersten Bauteil (4) und der Anordnung (28, 23; 29, 23) aus Wärmequelle (28; 29) und Primerauftrageinrichtung (23) einstellt.

9. Fügeflächenvorbehandlungsvorrichtung (20) nach einem der vorangehenden Ansprüche,
wobei die Primerauftrageinrichtung (23) derart zu der Wärmequelle (28; 29) angeordnet ist, dass die Primerauftrageinrichtung (23) den Primer (P) in etwa in die Mitte des von der Wärmequelle (28; 29) erwärmten Teils (TO) der Oberfläche des ersten Bauteils (4) auftragen kann, und/oder
wobei die Primerauftrageinrichtung (23) in etwa in der Mitte der Wärmequelle (28; 29) oder seitlich neben der Wärmequelle (28; 29) angeordnet ist.

10. Automatisierungsanlage (1) zur Produktion eines Gegenstands (3) aus mindestens zwei Bauteilen (4, 5), mit
einer Fügeflächenvorbehandlungsvorrichtung (20) nach einem der vorangehenden Ansprüche, und
einer Aufnahmevorrichtung (10) zur Aufnahme des ersten Bauteils (4), so dass der Teil (TO) der Oberfläche des ersten Bauteils (4), an welchem das erste Bauteil (4) an das zweite Bauteil (5) gefügt werden soll, bei einer Vorbehandlung des ersten Bauteils (4) mit der Fügeflächenvorbehandlungsvorrichtung (20) der Anordnung (28, 23; 29, 23) aus Wärmequelle (28; 29) und Primerauftrageinrichtung (23) zugewandt ist.

11. Automatisierungsanlage (1) nach Anspruch 10, zudem mit einer Antriebseinrichtung (11) zum Antrieb der Aufnahmevorrichtung (10), so dass sich die Aufnahmevorrichtung (10) und/oder die Anordnung (28, 23; 29, 23) relativ zueinander bewegen.

12. Automatisierungsanlage (1) nach Anspruch 10 oder 11, zudem mit einer Klebevorrichtung (30) zum aneinander Kleben des ersten und zweiten Bauteils (4, 5) an der Fügefläche (TO), wobei die Klebevorrichtung (30) der Fügeflächenvorbehandlungsvorrichtung (20) unmittelbar nachgeschaltet ist.

13. Fügeflächenvorbehandlungsverfahren zum Vorbehandeln, mit einer Fügeflächenvorbehandlungsvorrichtung (20), einer Fügefläche (TO) eines Bauteils (4), die zum Zusammenfügen zweier Bauteile (4, 5) dient, mit
einem Erwärmungsschritt eines Erwärmens eines Teils (TO) einer Oberfläche eines ersten Bauteils (4), an welchem das erste Bauteil (4) an ein zweites Bauteil (5) gefügt werden soll, mittels einer Wärmequelle (28; 29), und
einem Primerauftragschritt eines Auftragens eines Primers (P) mittels einer Primerauftrageinrichtung (23) auf einen von der Wärmequelle (28; 29) erwärmbaren Teil (TO) der Oberfläche des ersten Bauteils (4),
wobei die Wärmequelle (28; 29) und die Primerauftrageinrichtung (23) derart zueinander angeordnet sind, dass die Wärmequelle (28; 29) bei dem Erwärmungsschritt den Teil (TO) der Oberfläche des ersten Bauteils (4), an welchem das erste Bauteil (4) an das zweite Bauteil (5) gefügt werden soll, sowohl vor als auch nach dem Primerauftragschritt erwärmt, **dadurch gekennzeichnet, dass** die Fügeflächenvorbehandlungsvorrichtung (20) eine Antriebseinrichtung (25) zum Antrieb der Anordnung (28, 23; 29, 23) aus Wärmequelle (28; 29) und Primerauftrageinrichtung (23) in eine Bewegung (BW2) relativ zum ersten Bauteil (4) umfasst.

## Claims

1. A joining surface pretreatment device (20) for pretreating a joining surface (TO) of a component (4), which joining surface (TO) is used for joining two components (4, 5), the joining surface pretreatment device (20) comprising
a heat source (28; 29) for heating a portion (TO) of a surface of a first component (4) at which portion (TO) the first component (4) shall be joined with a second component (5), and
a primer application device (23) for applying a primer (P) to a portion (TO) of the surface of the first component (4) which portion (TO) is heatable by the heat source (28; 29),
wherein the heat source (28; 29) and the primer application device (23) are arranged to one another so that the heat source (28; 29) can heat the portion (TO) of the surface of the first component (4), at which portion (TO) the first component (4) shall be joined with the second component (5), both before and after applying the primer (P) by the primer application device (23),
**characterized in that**
the joining surface pretreatment device (20) includes a driving device (25) for driving the arrangement (28, 23; 29, 23) including the heat source (28; 29) and the primer application device (23) in a movement (BW2) relative to the first component (4).

2. The joining surface pretreatment device (20) according to claim 1, wherein the heating power of the heat source (28; 29) is continuously variable.

3. The joining surface pretreatment device (20) according to claim 1 or 2, wherein the joining surface pretreatment device (20) is configured so that the first component (4) is moveable along the arrangement (28, 23; 29, 23) including the heat source (28; 29) and the primer application device (23).

4. The joining surface pretreatment device (20) according to one of the preceding claims, wherein the heat source(s) (28; 29) include(s) an infrared radiation source or a laser source or an induction source or a hot air blower or a blower for introducing warm compressed air.

5. The joining surface pretreatment device (20) according to one of the preceding claims, wherein the heat source (29) has a shape that is adapted to the joining surface (TO) and/or is pivotable about the joining surface (TO).

6. The joining surface pretreatment device (20) according to one of the preceding claims, wherein the primer application device (23) is configured for applying hydro primer.

7. The joining surface pretreatment device (20) according to one of the preceding claims, wherein the primer application device (23) is configured for applying heated primer (P).

8. The joining surface pretreatment device (20) according to one of the preceding claims, wherein the primer application device (23) is configured so that it adjusts the amount of applied primer (P) as a function of the velocity of a relative movement between the first component (4) and the arrangement (28, 23; 29, 23) including the heat source (28; 29) and the primer application device (23).

9. The joining surface pretreatment device (20) according to one of the preceding claims,
wherein the primer application device (23) is arranged to the heat source (28; 29) so that the primer application device (23) can apply the primer (P) approximately in the center of the portion (TO) of the surface of the first component (4) which portion (TO) is heated by the heat source (28; 29), and/or
wherein the primer application device (23) is arranged approximately in the center of the heat source (28; 29) or laterally adjacent to the heat source (28; 29).

10. A piece of factory automation machinery (1) for producing an object (3) with at least two components (4, 5), comprising:
a joining surface pretreatment device (20) according to one of the preceding claims, and
a receiver (10) for receiving the first component (4) so that the portion (TO) of the surface of the first component (4), at which portion (TO) the first component (4) shall be joined with the second component (5), is oriented towards the arrangement (28, 23; 29, 23) including the heat source (28; 29) and the primer application device (23) when the first component (4) is pretreated with the joining surface pretreatment device (20).

11. The piece of factory automation machinery according to claim 10, further comprising:
a driving device (11) for driving the receiver (10), so that the receiver (10) and/or the arrangement (28, 23; 29, 23) move relative to one another.

12. The piece of factory automation machinery according to claim 10 or 11, further comprising a gluing device (30) for gluing the first and second component (4, 5) together at the joining surface (TO), wherein the gluing device (30) is arranged directly downstream of the joining surface pretreatment device (20).

13. A joining surface pretreatment method for pretreating, with a joining surface pretreatment device (20), a joining surface (TO) of a component (4) which joining surface (TO) is used for joining two components (4, 5), the joining surface pretreatment method comprising:
a heating step of heating with a heat source (28; 29) a portion (TO) of a surface of a first component (4) at which portion (TO) the first component (4) shall be joined with a second component (5); and
a primer applying step of applying a primer (P) with a primer application device (23) to a portion (TO) of the surface of the first component (4) which portion (TO) is heatable by the heat source (28; 29),
wherein the heat source (28; 29) and the primer application device (23) are arranged to one another so that the heat source (28; 29) can heat the portion (TO) of the surface of the first component (4), at which portion (TO) the first component (4) shall be joined with the second component (5), in the heating step both before and after the primer applying step,
**characterized in that**
the joining surface pretreatment device (20) includes a driving device (25) for driving the arrangement (28, 23; 29, 23) including the heat source (28; 29) and the primer application device (23) in a movement (BW2) relative to the first component (4).

## Revendications

1. Dispositif de prétraitement de surface d'assemblage (20) pour traiter une surface d'assemblage (TO) d'un composant (4), laquelle surface d'assemblage (TO) est utilisée pour assembler deux composants (4, 5), le dispositif de prétraitement de surface d'assemblage (20) comprenant:
une source de chaleur (28; 29) pour chauffer une partie (TO) d'une surface d'un premier composant (4), à laquelle partie (TO), le premier composant (4) sera assemblé avec un second composant (5), et
un dispositif d'application de primaire (23) pour appliquer un primaire (P) sur une partie (TO) de la surface du premier composant (4), laquelle partie (TO) peut être chauffée par la source de chaleur (28; 29),
dans lequel la source de chaleur (28; 29) et le dispositif d'application de primaire (23) sont agencés l'un par rapport à l'autre de sorte que la source de chaleur (28; 29) peut chauffer la partie (TO) de la surface du premier composant (4), à laquelle partie (TO), le premier composant (4) sera assemblé avec le second composant (5), avant et après l'application du primaire (P) par le dispositif d'application de primaire (23),
**caractérisé en ce que** :
le dispositif de prétraitement de surface d'assemblage (20) comprend un dispositif d'entraînement (25) pour entraîner l'agencement (28, 23; 29, 23) comprenant la source de chaleur (28; 29) et le dispositif d'application de primaire (23) dans un mouvement (BW2) par rapport au premier composant (4).

2. Dispositif de prétraitement de surface d'assemblage (20) selon la revendication 1, dans lequel la puissance de chauffage de la source de chaleur (28; 29) est à variation continue.

3. Dispositif de prétraitement de surface d'assemblage (20) selon la revendication 1 ou 2, dans lequel le dispositif de prétraitement de surface d'assemblage (20) est configuré de sorte que le premier composant (4) est mobile le long de l'agencement (28, 23; 29, 23) comprenant la source de chaleur (28; 29) et le dispositif d'application de primaire (23).

4. Dispositif de prétraitement de surface d'assemblage (20) selon l'une des revendications précédentes, dans lequel la (les) source(s) de chaleur (28; 29) comprend (comprennent) une source de rayonnement infrarouge ou une source de laser ou une source d'induction ou une soufflante d'air chaud ou une soufflante pour introduire de l'air comprimé chaud.

5. Dispositif de prétraitement de surface d'assemblage (20) selon l'une des revendications précédentes, dans lequel la source de chaleur (29) a une forme qui est adaptée à la surface d'assemblage (TO) et/ou peut pivoter autour de la surface d'assemblage (TO).

6. Dispositif de prétraitement de surface d'assemblage (20) selon l'une des revendications précédentes, dans lequel le dispositif d'application de primaire (23) est configuré pour appliquer un primaire hydroélectrique.

7. Dispositif de prétraitement de surface d'assemblage (20) selon l'une des revendications précédentes, dans lequel le dispositif d'application de primaire (23) est configuré pour appliquer le primaire (P) chauffé.

8. Dispositif de prétraitement de surface d'assemblage (20) selon l'une des revendications précédentes, dans lequel le dispositif d'application de primaire (23) est configuré de sorte qu'il ajuste la quantité du primaire (P) appliqué en fonction de la vitesse d'un mouvement relatif entre le premier composant (4) et l'agencement (28, 23; 29, 23) comprenant la source de chaleur (28; 29) et le dispositif d'application de primaire (23).

9. Dispositif de prétraitement de surface d'assemblage (20) selon l'une des revendications précédentes,
dans lequel le dispositif d'application de primaire (23) est agencé sur la source de chaleur (28; 29) de sorte que le dispositif d'application de primaire (23) peut appliquer le primaire (P) approximativement au centre de la partie (TO) de la surface du premier composant (4), laquelle partie (TO) est chauffée par la source de chaleur (28; 29), et/ou
dans lequel le dispositif d'application de primaire (23) est agencé approximativement au centre de la source de chaleur (28; 29) ou de manière latéralement adjacente à la source de chaleur (28; 29).

10. Pièce de machine d'automatisation d'usine (1) pour produire un objet (3) avec au moins deux composants (4, 5), comprenant:
un dispositif de prétraitement de surface d'assemblage (20) selon l'une des revendications précédentes, et
un receveur (10) pour recevoir le premier composant (4) de sorte que la partie (TO) de la surface du premier composant (4), à laquelle partie (TO), le premier composant (4) sera assemblé avec le second composant (5), est orientée vers l'agencement (28, 23; 29, 23) comprenant la source de chaleur (28; 29) et le dispositif d'application de primaire (23) lorsque le premier composant (4) est prétraité avec le dispositif de prétraitement de surface d'assemblage (20).

11. Pièce de machinerie d'automatisation d'usine selon la revendication 10, comprenant en outre:
un dispositif d'entraînement (11) pour entraîner le receveur (10), de sorte que le receveur (10) et/ou l'agencement (28, 23; 29, 23) se déplacent l'un par rapport à l'autre.

12. Pièce de machinerie d'automatisation d'usine selon la revendication 10 ou 11, comprenant en outre un dispositif de collage (30) pour coller les premier et second composants (4, 5) ensemble au niveau de la surface d'assemblage (TO), dans lequel le dispositif de collage (30) est agencé directement en aval du dispositif de prétraitement de surface d'assemblage (20).

13. Procédé de prétraitement de surface d'assemblage pour prétraiter, avec un dispositif de prétraitement de surface d'assemblage (20), une surface d'assemblage (TO) d'un composant (4), laquelle surface d'assemblage (TO) est utilisée pour assembler deux composants (4, 5), le procédé de prétraitement de surface d'assemblage comprenant:
une étape de chauffage d'une surface de chauffage consistant à chauffer avec une source de chaleur (28; 29), une partie (TO) d'une surface d'un premier composant (4), à laquelle partie (TO), le premier composant (4) sera assemblé avec un second composant (5) ; et
une étape d'application de primaire consistant à appliquer un primaire (P) avec un dispositif d'application de primaire (23) sur une partie (TO) de la surface du premier composant (4), laquelle partie (TO) peut être chauffée par la source de chaleur (28; 29),
dans lequel la source de chaleur (28; 29) et le dispositif d'application de primaire (23) sont agencés l'un par rapport à l'autre de sorte que la source de chaleur (28; 29) peut chauffer la partie (TO) de la surface du premier composant (4), à laquelle partie (TO), le premier composant (4) sera assemblé avec le second composant (5), lors de l'étape de chauffage avant et après l'étape d'application de primaire,
**caractérisé en ce que**:
le dispositif de prétraitement de surface d'assemblage (20) comprend un dispositif d'entraînement (25) pour entraîner l'agencement (28, 23; 29, 23) comprenant la source de chaleur (28; 29) et le dispositif d'application de primaire (23) dans un mouvement (BW2) par rapport au premier composant (4).
